# EUROPÄISCHE PATENTSCHRIFT

(11) **EP 1 612 030 B1**
(45) Veröffentlichungstag und Bekanntmachung des Hinweises auf die Patenterteilung: **05.09.2007**
(21) Anmeldenummer: 04015688.7
(22) Anmeldetag: 03.07.2004
(51) Int. Cl.: B29C 49/00, B29C 47/12, B29C 49/78, B29C 47/92

(54) **Verfahren zur fortlaufenden Herstellung eines Doppelwand-Wellrohres mit Rohrmuffe, das Doppelwand-Wellrohr und die Vorrichtung zur Durchführung des Verfahrens**
Method for continuous manufacturing of a double walled corrugated pipe with a socket, the double walled corrugated pipe and the apparatus for performing the method
Procédé pour fabriquer en continu d'un tuyau ondulé à double parois avec manchon, le tuyau ondulé à double parois et le dispositif pour la mise en oeuvre

(43) Veröffentlichungstag der Anmeldung: 04.01.2006
(73) Patentinhaber: Hegler, Ralph-Peter, Dr.-Ing., 97688 Bad Kissingen (DE)
(72) Erfinder: Hegler, Ralph-Peter, Dr.-Ing., 97688 Bad Kissingen (DE)
(74) Vertreter: Rau, Manfred

(56) Entgegenhaltungen:
- EP-A- 0 563 575
- EP-A- 0 995 579
- WO-A-03/068482
- DE-U- 9 321 573
- US-A- 4 534 923
- US-A- 5 405 569

## Beschreibung

Die Erfindung betrifft ein Verfahren nach dem Oberbegriff des Anspruches l, ein Verbundrohr nach dem Oberbegriff des Anspruches 6 und eine Vorrichtung nach dem Oberbegriff des Anspruches 9.

Aus der EP 0 563 575 A2 (entsprechend US 5,320,797) sind ein derartiges Verfahren, ein derartiges Verbundrohr und eine derartige Vorrichtung bekannt. Je größer die Nennweiten der Rohre werden, umso größer werden die Wellenberge und damit auch die relative Vergrößerung der Rohr-Muffe gegenüber dem Innendurchmesser des Verbundrohres. Dies ist darauf zurückzuführen, dass das normale Verbundrohr in vielen Fällen auch als Spitzende des Rohres verwendet wird, dass also ein Verbundrohr mit den Wellenbergen in die Rohr-Muffe eingeführt wird. Die Übergangs-Abschnitte zwischen dem bei der in-line-Herstellung voreilenden Verbundrohr und der Rohr-Muffe einerseits und der Rohr-Muffe und dem nacheilenden Verbundrohr haben also eine beträchtliche radiale Erstreckung. Insbesondere der auch nach der Durchtrennung des endlosen Rohrstrangs verbleibende Übergangs-Abschnitt zwischen Verbundrohr und Rohr-Muffe soll eine ausgeprägte radiale Erstreckung haben, also bezogen auf die Mittel-Längs-Achse steil nach außen gerichtet sein, damit beim Einführen des Spitzendes in die Rohr-Muffe bis an den Übergangs-Abschnitt heran keine Toträume bzw. keine erheblichen Toträume entstehen, in denen sich Schmutz ablagern kann. Je größer die Nennweiten sind und/oder je größer die Produktionsgeschwindigkeit ist, desto größer ist die Gefahr, dass im Bereich des Übergangs-Abschnitts und am Muffen-Anfang und Muffen-Ende der Innen-Schlauch sich nicht vollflächig an den Außen-Schlauch anlegt. Der Erfindung liegt die Aufgabe zugrunde, ein Verfahren, ein Verbundrohr und eine Vorrichtung der jeweils gattungsgemäßen Art so auszugestalten, dass ein vollflächiges Anlegen und damit Verschweißen des Innen-Schlauches am Außen-Schlauch im Bereich des Übergangs-Abschnitts erreicht wird.

Diese Aufgabe wird erfindungsgemäß durch die Merkmale im Kennzeichnungsteil des Anspruches 1 für ein Verfahren, im Kennzeichnungsteil des Anspruches 6 für ein Verbundrohr und im Kennzeichnungsteil des Anspruches 9 für eine Vorrichtung gelöst.

Der Kern der Erfindung liegt darin, dass der Raum zwischen dem Innen-Schlauch und dem Außen-Schlauch im Bereich des Übergangs-Abschnitts, also am Übergang vom Verbundrohr zur Rohr-Muffe entlüftet wird, so dass der Innen-Schlauch vollflächig durch den auf ihn von innen ausgeübten Druck gegen den entsprechenden Bereich des Außen-Schlauches gedrückt und mit diesem verschweißt wird. Die Entlüftung erfolgt nicht nach außen, sondern in dem benachbarten Wellenberg und gegebenenfalls noch einem weiteren benachbarten Wellenberg. Da die zu verdrängenden Luftmengen gering sind, reicht dies aus. Wesentlich ist es, die erfindungsgemäße Ausgestaltung an dem Übergangs-Abschnitt zwischen Verbundrohr und Rohr-Muffe vorzunehmen, der beim fertigen Verbundrohr zwischen Rohr-Muffe und Verbundrohr verbleibt. Nach der in-line-Herstellung des Verbundrohres wird ein Übergangs-Abschnitt zwischen Rohr-Muffe und Verbundrohr herausgeschnitten. Bei diesem Übergangs-Abschnitt können die erfindungsgemäßen Maßnahmen vorgesehen werden; notwendig ist es nicht.

Weitere vorteilhafte Ausgestaltungen ergeben sich aus den Unteransprüchen.

Weitere Merkmale, Vorteile und Einzelheiten der Erfindung ergeben sich aus der nachfolgenden Beschreibung eines Ausführungsbeispiels anhand der Zeichnung. Es zeigt
- Fig. 1: eine im wesentlichen aus zwei Extrudern, einer Formmaschine und einer Nachkühlvorrichtung bestehende Anlage zur Herstellung von Verbundrohren mit Rohr-Muffen in Draufsicht in schematischer Darstellung,
- Fig. 2: einen Spritzkopf und das Einlaufende der Formmaschine im Horizontalschnitt,
- Fig. 3: einen vertikalen Teil-Längsschnitt durch die Formmaschine während der Herstellung eines normalen Verbundrohres,
- Fig. 4: den vertikalen Teil-Längsschnitt gemäß Fig. 3 in einer Position zu Beginn der Herstellung einer Rohr-Muffe,
- Fig. 5: einen vergrößerten Teil-Ausschnitt gemäß der Linie V in Fig. 4,
- Fig. 6: den vertikalen Teil-Längsschnitt entsprechend Fig. 3 und 4 in einer Position am Ende der Herstellung der Rohr-Muffe,
- Fig. 7: den vertikalen Teil-Längsschnitt gemäß den Fig. 3, 4, 6 mit einer Ergänzung,
- Fig. 8: ein auf der Anlage hergestelltes Verbundrohr mit Rohr-Muffe,
- Fig. 9: einen Querschnitt durch das Verbundrohr gemäß der Schnittlinie IX-IX in Fig. 8,

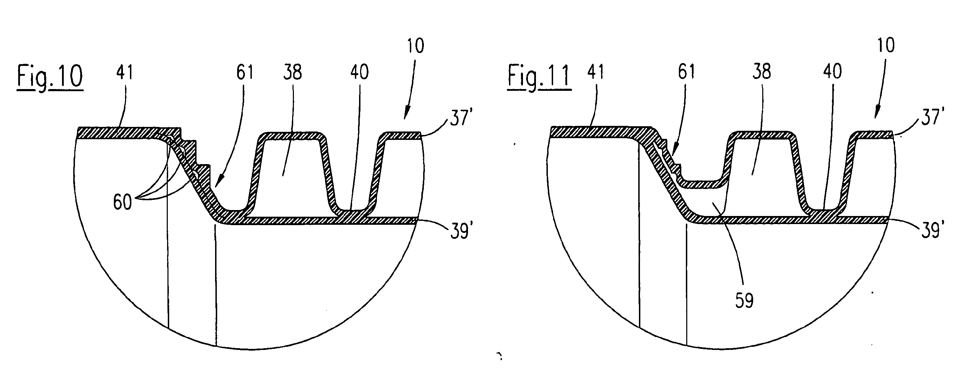

- Fig. 10: einen Teil-Längsschnitt durch das Verbundrohr entsprechend der Schnittlinie X-X in Fig. 9,

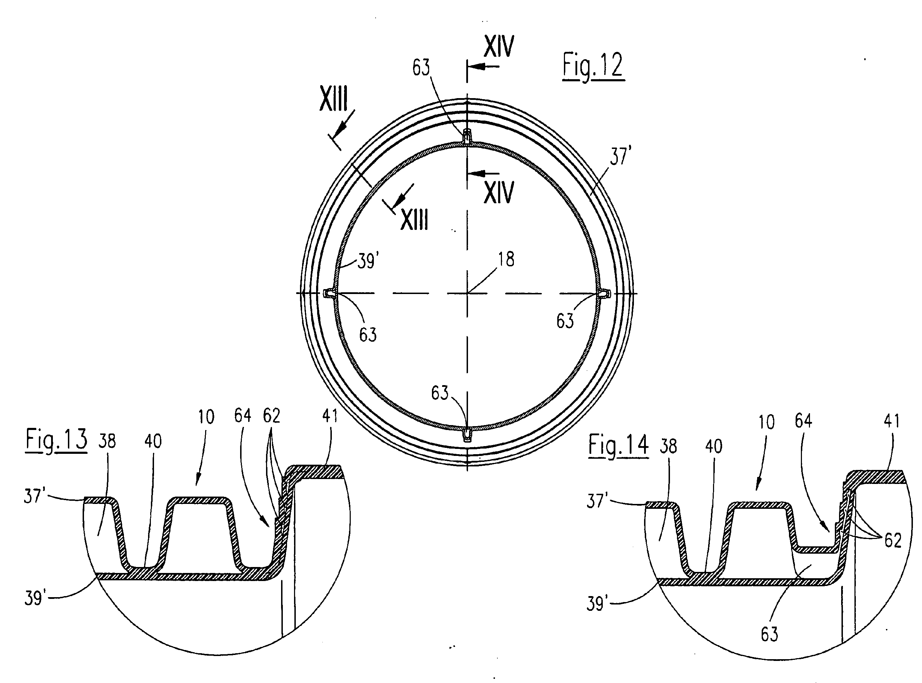

- Fig. 11: einen Teil-Längsschnitt durch das Verbundrohr gemäß der Schnittlinie XI-XI in Fig. 9,
- Fig. 12: einen Querschnitt durch das Verbundrohr gemäß der Schnittlinie XII-XII in Fig. 8,
- Fig. 13: einen Teil-Längsschnitt durch das Verbundrohr entsprechend der Schnittlinie XIII-XIII in Fig. 12 und
- Fig. 14: einen Teil-Längsschnitt durch das Verbundrohr gemäß der Schnittlinie XIV-XIV in Fig. 12.

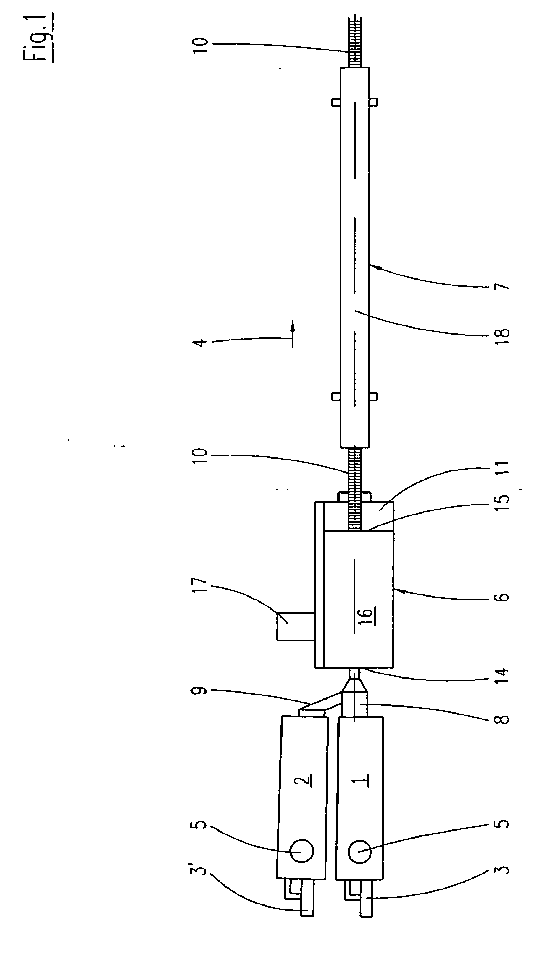

Die in Fig. 1 dargestellte Anlage zur Herstellung von Verbundrohren weist zwei Extruder 1, 2 auf. Diese werden jeweils von einem drehzahlregelbaren Antriebsmotor 3 bzw. 3' angetrieben, der - bezogen auf eine Förderrichtung 4 der gesamten Anlage - stromaufwärts vor den Zuführtrichtern 5 der Extruder 1, 2 vorgesehen ist.

Bezogen auf die Förderrichtung 4 stromabwärts von den Extrudern 1, 2 ist eine Formmaschine 6, ein sogenannter Korrugator, angeordnet, dem wiederum eine Nachkühlvorrichtung 7 nachgeordnet ist. An einem fluchtend mit der Formmaschine 6 und der Nachkühlvorrichtung 7 angeordneten Extruder 1 ist ein Quer-Spritzkopf 8 angebracht, der in die Formmaschine 6 hineinragt. Der andere, seitlich dieses Extruders 1 angeordnete Extruder 2 ist über einen seitlich in den Quer-Spritzkopf 8 einmündenden Spritzkanal 9 mit dem Quer-Spritzkopf 8 verbunden. Wie schematisch in Fig. 1 angedeutet ist, wird in der Formmaschine 6 ein Verbundrohr 10 geformt, das in Förderrichtung 4 aus der Formmaschine 6 austritt und in der Nachkühlvorrichtung 7 abgekühlt wird. Hinter dieser Nachkühlvorrichtung 7 kann es dann in Stücke geeigneter Länge zerschnitten werden.

Die Formmaschine 6 ist in ihrem Aufbau bekannt und in der Praxis üblich. Sie ist beispielsweise in der EP 0 563 575 B1 (entsprechend US-PS 5,320,797) beschrieben, worauf ausdrücklich verwiesen wird. Sie weist im wesentlichen einen Maschinentisch 11 auf, auf dem Halbkokillen 12, 12' angeordnet sind, die jeweils zu zwei sogenannten Ketten 13, 13' miteinander verbunden sind. Diese Ketten 13, 13' werden am - bezogen auf die Förderrichtung 4 - stromaufwärtigen Einlaufende 14 und an ihrem stromabwärtigen Auslaufende 15 über nicht dargestellte Umlenkrollen geführt. Sie werden bei dem Umlauf in Förderrichtung 4 derart geführt, dass jeweils zwei Halbkokillen 12, 12' zu einem Kokillen-Paar vereinigt werden, wobei wiederum in Förderrichtung 4 hintereinanderfolgende Kokillen-Paare dicht an dicht liegen. Der Antrieb der auf einer Formstrecke 16 jeweils zu Kokillen-Paaren zusammengeführten Halbkokillen 12, 12' erfolgt mittels eines Antriebsmotors 17.

Der Quer-Spritzkopf 8 weist zwei konzentrisch zu einer gemeinsamen Mittel-Längs-Achse 18 angeordnete Schmelzekanäle, nämlich einen inneren Schmelzekanal 19 und einen äußeren Schmelzekanal 20, auf, die - bezogen auf die Förderrichtung 4 - stromabwärts in einer Innen-Düse 21 bzw. einer Außen-Düse 22 enden. Der innere Schmelzekanal 19 ist an einen Spritzkanal 23 des fluchtend mit der Formmaschine 6 angeordneten Extruders 1 angeschlossen, wogegen der äußere Schmelzekanal 20 an den Spritzkanal 9 des anderen Extruders 2 angeschlossen ist. Zwischen der Innen-Düse 21 und der Außen-Düse 22 mündet aus dem Spritzkopf 8 ein Gaskanal 24, der einerseits über ein Ventil an eine Druckgasquelle zum Einblasen von sogenannter Stützluft oder andererseits an Atmosphäre oder an ein Teil-Vakuum anschließbar ist.

Am - bezogen auf die Förderrichtung 4 - stromabwärtigen Ende des Spritzkopfes 8 ist an diesem ein Kalibrierdorn 25 angebracht, der ebenfalls konzentrisch zur Achse 18 verläuft. Er weist Kühlkanäle 26 auf, durch die Kühlwasser geführt wird, das über eine Kühlwasser-Vorlaufleitung 27 zugeführt und eine Kühlwasser-Rücklaufleitung 28 abgeführt wird. Weiterhin ist eine Luftleitung 29 vorgesehen, die an einen als zusätzlicher Gaskanal dienenden Gasspalt 30 angeschlossen ist, der sich - bezogen auf die Förderrichtung 4 - unmittelbar stromabwärts der Innen-Düse 21 zwischen dem Spritzkopf 8 und dem Kalibrierdorn 25 befindet. Die Leitungen 27, 28, 29 sind durch einen konzentrisch zur Achse 18 im Spritzkopf 8 ausgebildeten, etwa rohrförmigen Versorgungskanal 31 geführt.

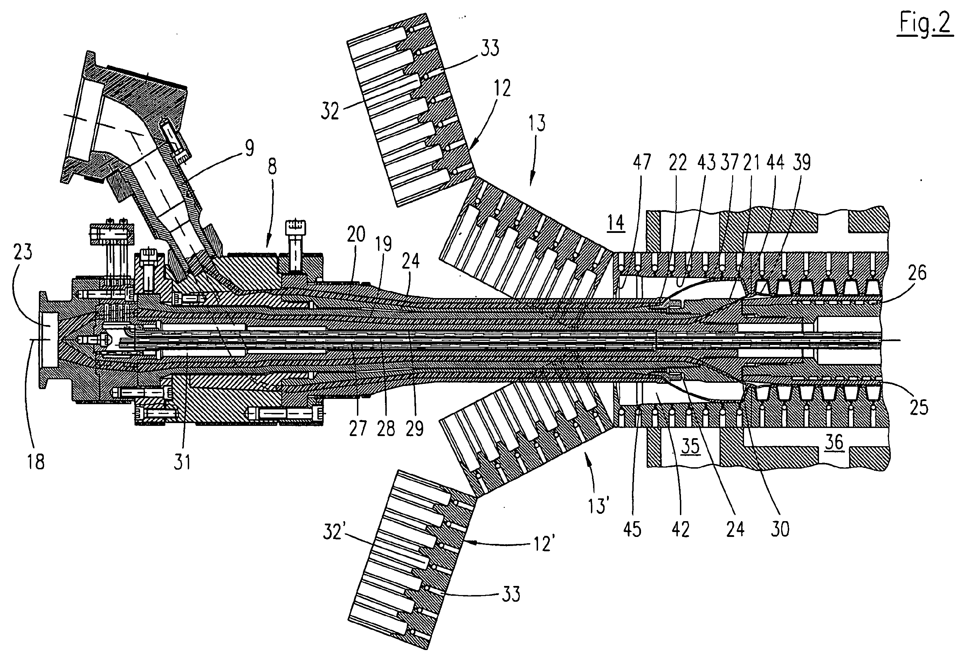

Die Halbkokillen 12, 12' weisen ringförmige Formausnehmungen 32, 32' auf, die in regelmäßigen Abständen hintereinander angeordnet sind und die jeweils an Teil-Vakuum-Kanäle 33 angeschlossen sind. Beim Einlauf der Halbkokillen 12, 12' in die Formstrecke 16 gelangen die Teil-Vakuum-Kanäle 33 - wie Fig. 2 entnehmbar ist - an Teil-Vakuum-Versorgungsquellen 35 bzw. 36, so dass die Formausnehmungen 32 mit Teil-Vakuum beaufschlagt werden.

Die vom Extruder 2 durch den Spritzkanal 9 dem Spritzkopf 8 zugeführte Kunststoff-Schmelze strömt durch den äußeren Schmelzekanal 20 zur Außen-Düse 22 und wird dort unter Formung eines Außen-Schlauchs 37 extrudiert. Aufgrund des Teil-Vakuums legt sich dieser Schlauch 37 unter Formung eines mit ringförmigen Wellenbergen 38 versehenen Schlauchs in die Formausnehmungen 32, 32'. Aus dem Extruder 1 wird durch den Spritzkanal 23 dem Quer-Spritzkopf 8 Kunststoff-Schmelze zugeführt und strömt durch den inneren Schmelzekanal 19 zur Innen-Düse 21 und tritt dort als Innen-Schlauch 39 aus, der auf den Kalibrier-Dorn 25 gelangt. Dieser erweitert sich von der Innen-Düse 21 in Förderrichtung 4 leicht nach außen, bis der Innen-Schlauch 39 gegen die Wellentäler 40 des Außen-Schlauchs 37 gelangt und hier mit diesem verschweißt wird. Der Innen-Schlauch 39 und der Außen-Schlauch 37 bilden nach Abkühlung unter Erstarrung das Verbundrohr 10.

Wie insbesondere aus den Figuren 2, 3, 4, 6 und 7 ersichtlich ist, sind die Halbkokillen 12, 12' so ausgebildet, dass jeweils in vorgegebenen Abständen innerhalb des endlos hergestellten Verbundrohres 10 Rohr-Muffen 41 ausgebildet werden. Hierzu ist in einem Paar von Halbkokillen 12, 12' eine Muffen-Ausnehmung 42 ausgebildet, die also eine im wesentlichen glatte, zylindrische Wand 43 aufweist. Zwischen der Wand 43 der Muffen-Ausnehmung 42 und der in Förderrichtung 4 voreilenden Formausnehmung 32 ist eine Übergangs-Fläche 44 ausgebildet. An das - in Förderrichtung 4 - nacheilende Ende der Wand 43 der Muffen-Ausnehmung 42 schließen sich Umfangsrillen 34 zur Versteifung der Rohr-Muffe 41 und ein kegelstumpfförmiger Formabschnitt 45 an, in dem ein sich nach außen erweiterndes Einführende 46 der Muffe 41 ausgeformt wird. Daran schließt sich wiederum eine Übergangs-Fläche 47 an, die zur nächsten - in Förderrichtung 4 nacheilenden - Formausnehmung 32 führt.

Soweit die Vorrichtung bis hierher beschrieben ist, ist sie im Wesentlichen aus EP 0 995 579 A2 (entsprechend US 6,458,311) bekannt, worauf ausdrücklich verwiesen wird.

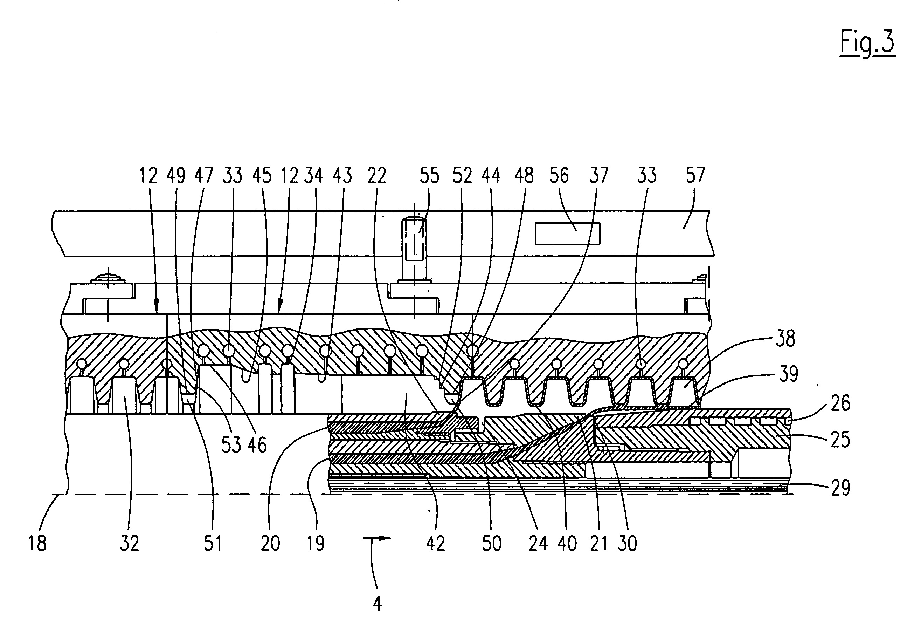

Wie aus Fig. 3 bis 7 hervorgeht, sind an der - in Förderrichtung 4 voreilenden - Übergangs-Fläche 44 und an der - in Förderrichtung 4 nacheilenden - Übergangs-Fläche 47 im Bereich des zu erzeugenden Wellentals 40 an dem die jeweilige Übergangs-Fläche 44 bzw. 47 formenden Ringsteg 48 bzw. 49 der Halbkokille 12, 12' in Richtung der Achse 18 verlaufende schlitzförmige Ausnehmungen 50, 51 ausgebildet. Diese Ausnehmungen 50, 51 verbinden also die jeweilige Übergangs-Fläche 44 bzw. 47 mit dem nächstbenachbarten ringförmigen Wellenberg 38. Die Ausnehmungen 50, 51 jedes Ringstegs 48, 49 sind mittels sich über den Umfang der jeweiligen Übergangs-Fläche 44 bzw. 47 erstreckenden und in letzteren ausgebildeten Verbindungsnuten 52, 53 miteinander verbunden.

Wie aus den Fig. 3, 4, 6, 7 hervorgeht, erstreckt sich die die Muffen-Ausnehmung 42 aufnehmende Halbkokille 12 über eine solche Länge, dass die Ringstege 48, 49 vollständig in ihr enthalten sind. Die Trennung benachbarter Halbkokillen 12 geht also abweichend von der insoweit nur schematischen Darstellung in Fig. 2 nicht durch den Ringsteg 48 bzw. 49. Dies hat fertigungstechnische Vorteile. Wenn die Muffen-Ausnehmung 42 so lang ist, dass sie sich über mehr als eine Halbkokille 12 erstreckt, dann gilt dies entsprechend für diese Halbkokillen 12.

In einer räumlich festen Zuordnung zu der Muffen-Ausnehmung 42 ist ein stabförmiges Schaltglied 55 mit der entsprechenden Halbkokille 12 verbunden, das einen Schalter 56 betätigt, mittels dessen die Drehzahl und damit die Extrudiergeschwindigkeit der Extruder 1, 2 verändert wird, und mittels dessen der Gaskanal 24 bzw. der Gasspalt 30 versorgt werden. Hierzu ist an der Formmaschine 6 ein Haltearm 57 angebracht, der sich oberhalb der Halbkokillen 12, 12' in Förderrichtung 4 erstreckt. An diesem Haltearm 57 ist der von dem Schaltglied 55 zu betätigende Schalter 56 angebracht. Dieser Schalter 56 wird - wie aus Fig. 3 bis 5 hervorgeht, betätigt. Die Veränderung der Drehzahl des Extruders 2, der die Kunststoff-Schmelze zur Herstellung des Außen-Schlauches 37 liefert, die Ansteuerung der sogenannten Stützluft, die aus dem Gaskanal 24 strömt, die Entlüftung über diesen Gaskanal 24, die Ansteuerung des Gasspaltes 30 am Kalibrierdorn 25 und schließlich die Änderung der Drehzahl und damit der Extrudiergeschwindigkeit des Extruders 1, der die Kunststoff-Schmelze zur Erzeugung des Innen-Schlauches 39 liefert, erfolgen über die Software einer Steuerung, für die der Schalter 56 bei Betätigung ein Referenzsignal liefert.

Während der Produktion des normalen gewellten Verbundrohres 10 in der in Fig. 3 rechts dargestellten Form wird der Außen-Schlauch 37 aufgrund des Teil-Vakuums in die Formausnehmungen 32 gezogen und liegt an diesen an. Hierbei wird ein geringer Überdruck von 0,05 bis 0,15 bar über Atmosphärendruck auf den Gasspalt 30 gegeben. Gleichzeitig wird auf den Gaskanal 24 ein ebenfalls geringer, aber höherer Überdruck von 0,2 bis 0,3 bar, ebenfalls gegenüber Atmosphäre gemessen, gegeben. Durch den geringen Überdruck innerhalb des Innen-Schlauches 39 wird verhindert, dass der Innen-Schlauch 39 an dem Kalibrierdorn 25 festklebt, bevor er mit dem Außen-Schlauch 37 verschweißt wird. Anstelle des Überdrucks kann auch ein Teil-Vakuum auf den Gasspalt 30 gegeben werden. Durch den etwas höheren Überdruck zwischen Außen-Schlauch 37 und Innen-Schlauch 39 wird sichergestellt, dass beim Abkühlen der an den Wellentälern 40 miteinander verschweißten Schläuche 37, 39 zum gewellten Verbundrohr 10 der Innen-Schlauch 39 nicht radial nach außen in den Wellenberg 38 hinein ausgewölbt wird. Beim Abkühlen der Schläuche 37, 39 stellt sich zwischen diesen exakt Atmosphärendruck ein. Während dieser Herstellung des normalen gewellten Verbundrohres 10 laufen die Extruder 1, 2 mit einer vorgegebenen Drehzahl, d.h. sie extrudieren jeweils einen konstanten Massestrom an Kunststoff-Schmelze pro Zeiteinheit. Je nach den Eigenschaften der Kunststoff-Schmelze, aus der der Innen-Schlauch 39 besteht, kann ein Teil-Vakuum am Kalibrierdorn 25 dazu dienen, eine glatte Innenfläche des Innen-Schlauches 39 und damit des späteren Innen-Rohres 39' zu erhalten. Es handelt sich hierbei dann um die sogenannte Vakuumkalibrierung.

Wenn in dem in Fig. 3 dargestellten Augenblick die Übergangs-Fläche 44 in den Bereich der Außen-Düse 22 kommt, gelangt das Schaltglied 55 zum Schalter 56, durch dessen Betätigung der Antriebsmotor 3' des Extruders 2 in seiner Drehzahl herabgesetzt wird, so dass die Extrudiergeschwindigkeit, d.h. der Massestrom an Kunststoff-Schmelze pro Zeiteinheit, reduziert wird. Durch die Reduktion der Drehzahl des Extruders 2 wird bewirkt, dass der sich aufgrund des Teil-Vakuums an die Übergangs-Fläche 44 und die Wand 43 der Muffen-Ausnehmung 42 anlegende Außen-Schlauch 37 pro Längeneinheit des Verbundrohres 10 weniger Kunststoff enthält als in dem Bereich des normalen gewellten Verbundrohres 10, in dem aus ihm ein Außenrohr 37' mit Wellenbergen 38 geformt wird. Je nach dem Grad der Reduktion der Drehzahl kann die Wanddicke im Bereich der Rohr-Muffe 41 gleich der im Bereich der Wellenberge 38 des Verbundrohres 10 oder größer oder kleiner sein. Eine entsprechende Anpassung bzw. Veränderung der Wanddicke im Bereich der Rohr-Muffe 41 kann ebenfalls in bekannter Weise durch Erhöhung der Geschwindigkeit der die Form 32 bildenden Halbkokillen 12, 12' erreicht werden. Andererseits kann auch über eine Erhöhung der Drehzahl des Extruders 2 bzw. eine Reduktion der Geschwindigkeit der Form 32 eine Vergrößerung der Wanddicke im Bereich der Rohr-Muffe 41 erreicht werden.

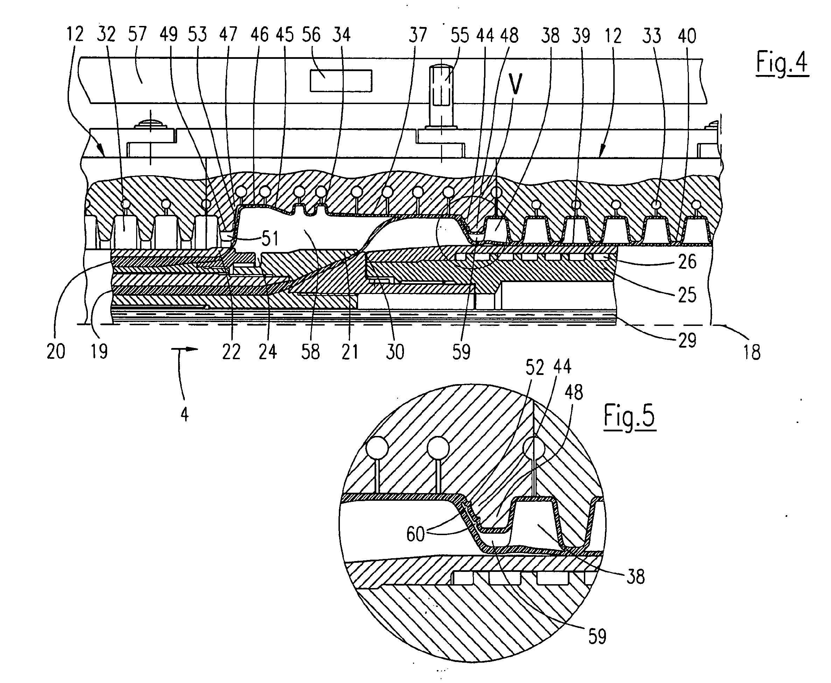

Wenn - etwa entsprechend der Darstellung in Fig. 4 - die Übergangs-Fläche 44 die Innen-Düse 21 erreicht, wird der Überdruck oder der Unterdruck der aus dem Gasspalt 30 austretenden Luft z.B. auf einen Überdruck von ca. 0,2 bis 0,45 bar erhöht. Gleichzeitig wird der Überdruck von dem Gaskanal 24 genommen und dieser an eine Vakuum-Quelle oder Atmosphäre geschaltet, so daß der Zwischenraum 58 zwischen Innen-Schlauch 39 und Außen-Schlauch 37 im Bereich der Muffen-Ausnehmung 42 entlüftet wird. Der Innen-Schlauch 39 wird nach außen gegen den Außen-Schlauch 37 gedrückt.

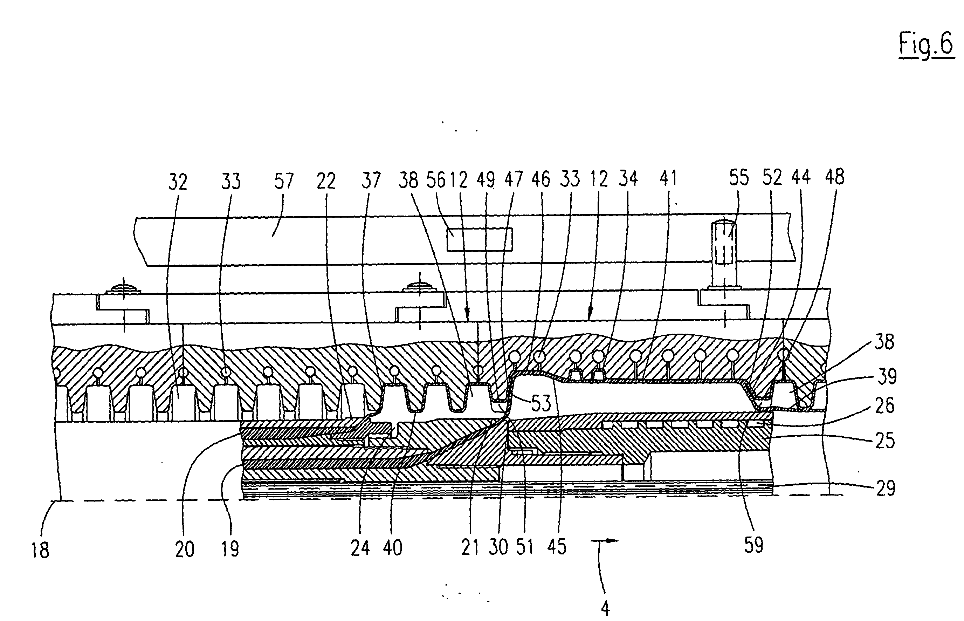

Wie Fig. 4 und 5 entnehmbar ist, legt sich der Außen-Schlauch 37 gegen den Ringsteg 48 und die Übergangs-Fläche 44, wobei gleichzeitig im Bereich der schlitzförmigen Ausnehmungen 50 ein in den benachbarten Wellenberg 38 führender Überström-Kanal 59 geformt wird. An der Übergangs-Fläche 44 legt sich der Außen-Schlauch 37 auch in die Verbindungsnuten 52, wodurch Verbindungs-Kanäle 60 in dem zu formenden Außen-Rohr 37' gebildet werden. Der Innen-Schlauch 39 wird aufgrund des in ihm herrschenden Drucks zwar gegen den Außen-Schlauch 37 gedrückt, aber nicht in die Überström-Kanäle 59 bzw. die Verbindungs-Kanäle 60 eingedrückt bzw. eingeformt, so dass diese Kanäle 59, 60 zwischen dem Außen-Schlauch 37 und dem Innen-Schlauch 39 erhalten bleiben. Die in diesem Bereich befindliche Luft kann also in den in Förderrichtung voreilenden Wellenberg 38 abströmen. In dem Übergangs-Abschnitt 61 zwischen dem normalen Verbundrohr 10 und der in-line angeformten Rohr-Muffe 41 werden also der Außen-Schlauch 37 und der Innen-Schlauch 39 fast vollflächig miteinander verschweißt. Lediglich im Bereich der Überström-Kanäle 59 und der Verbindungs-Kanäle 60 ist diese Verschweißung nicht gegeben. Diese Ausgestaltung ermöglicht es, den Übergangs-Abschnitt 61 - bezogen auf die Förderrichtung 4 - stark radial, also verhältnismäßig steil ansteigend, auszubilden.

Wenn die Übergangs-Fläche 44 über die Innen-Düse 21 hinweggefahren ist, wird der Antriebsmotor 3 des Extruders 1 in der Weise angesteuert, dass beispielsweise seine Drehzahl erhöht wird, d.h. der pro Zeiteinheit extrudierte Massestrom an Kunststoff-Schmelze wird vergrößert. Der Innen-Schlauch 39 erhält also im Bereich der zu erzeugenden Muffe 41 pro Längeneinheit mehr Kunststoff-Schmelze als im Bereich des normalen gewellten Verbundrohres 10, in dem aus ihm nur das glattwandige Innenrohr 39' geformt wird.

Wenn die Übergangs-Fläche 47 der Muffen-Ausnehmung 42 die Außendüse 22 überfährt, wird die Extrusionsgeschwindigkeit des den Außen-Schlauch 37 liefernden Extruders 2 wieder auf die ursprüngliche Geschwindigkeit zurückgesetzt. Der Extruder 2 liefert also wieder die Menge Kunststoff-Schmelze pro Zeiteinheit, die zur Erzeugung der Wellenberge 38 erforderlich ist. Der Außen-Schlauch 37 legt sich gegen die Übergangs-Fläche 47 und in die in diesem ausgebildeten Verbindungsnuten 53, wodurch Verbindungs-Kanäle 62 im Außen-Schlauch ausgebildet werden. Anschließend legt sich der Außen-Schlauch gegen den Ringsteg 49 und wird in die schlitzartigen Ausnehmungen 51 unter Bildung von Überströmkanälen 63 ausgeformt.

Wenn die Übergangs-Fläche 47 die Innen-Düse 21 erreicht, dann wird einerseits der Gasdruck am Gasspalt 30 wieder reduziert und der Gaskanal 24 mit Druckluft bzw. sogenannter Stützluft beaufschlagt, das heißt die verfahrenstechnischen Bedingungen werden wieder auf die Verhältnisse zurückgesetzt, die bei der Produktion des normalen Verbundrohres 10 bestehen. Wenn dann die Übergangs-Fläche 47 die Innen-Düse 21 überfahren hat, wird der Antriebsmotor 3 angesteuert und dadurch die Extrusionsgeschwindigkeit des Extruders 1 auf das ursprüngliche Maß zurückgenommen, so daß wieder die für die Erzeugung des glatten Innenrohres 39' erforderliche Menge an Kunststoff-Schmelze pro Zeiteinheit extrudiert wird. Wie bereits geschildert, legt sich der Innen-Schlauch 39 glatt gegen den Außen-Schlauch 37, wird aber nicht in die Verbindungs-Kanäle 62 und die Überström-Kanäle 63 hineingedrückt. Hierdurch wird die im Übergangs-Abschnitt 64 zwischen der Rohr-Muffe 41 und einem - bezogen auf die Förderrichtung 4 - nacheilenden normalen Verbundrohr 10 befindliche Luft in den nachfolgenden Wellenberg 38 abgeleitet.

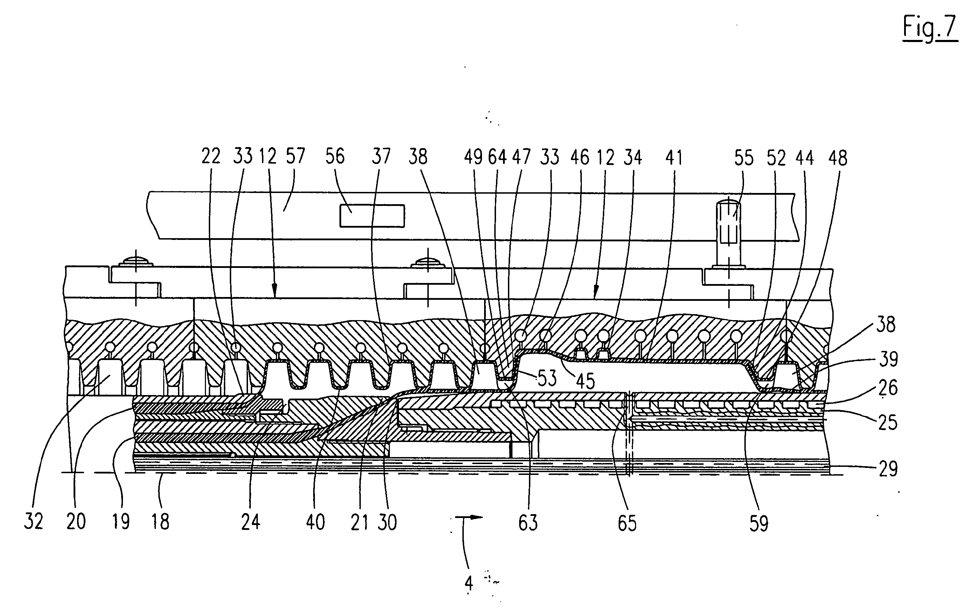

Wie Fig. 7 entnehmbar ist, kann im Kalibrierdorn 25 ein zusätzlicher Druckluft-Kanal 65 vorgesehen sein, durch den mittels einer entsprechenden Druckluftbeaufschlagung der noch verformungsfähige Innen-Schlauch 39 noch einmal zusätzlich mit Druckluft beaufschlagt wird, wodurch eventuell noch vorhandene Luft im Bereich der Übergangs-Abschnitte 61 bzw. 64 durch die Kanäle 59, 60 bzw. 62, 63 in die benachbarten Wellenberge 38 abgeleitet wird. Die zusätzliche kurzzeitige Druckluftbeaufschlagung erfolgt erst, wenn sowohl der in Förderrichtung 4 voreilende Ringsteg 48 als auch der in Förderrichtung 4 nacheilende Ringsteg 49 und die zwischen diesen befindliche Muffen-Ausnehmung 42 sich vollständig über dem Kalibrierdorn 25 befinden, wodurch eine Abdichtung des innerhalb der erzeugten Rohr-Muffe 41 befindlichen Innenraums in Förderrichtung 4 und entgegen der Förderrichtung 4 durch die in den Wellentälern 40 zwischen den Ringstegen 48, 49 und dem Kalibrierdorn 25 befindliche Kunststoff-Schmelze erfolgt. Die Ansteuerung der über den Druckluft-Kanal 65 zugefiihrten Druckluft erfolgt in der oben geschilderten Weise über den Schalter 56.

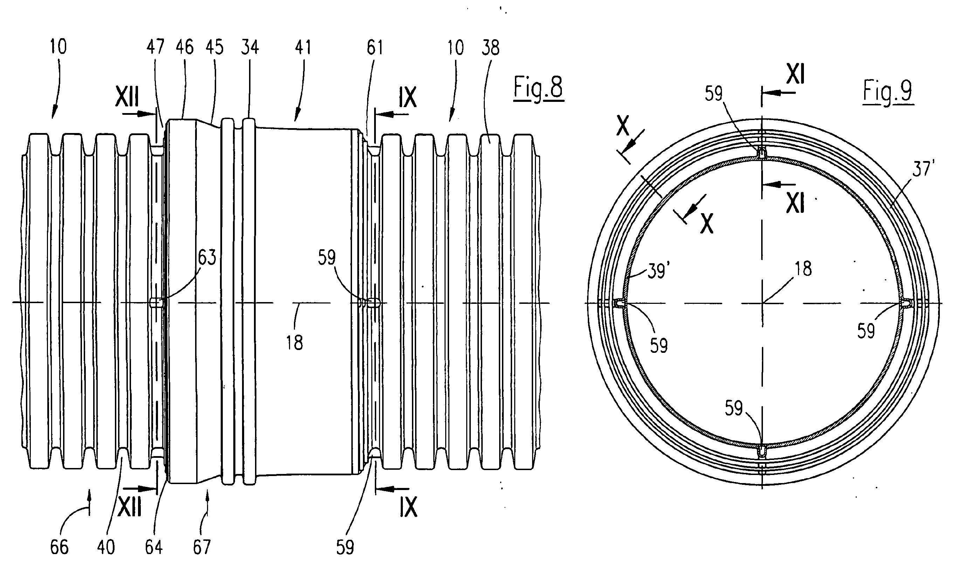

Das insbesondere in Fig. 8 dargestellte in-line endlos hergestellte Verbundrohr wird im Bereich der in Förderrichtung 4 nacheilenden Übergangs-Fläche 47 durchtrennt, und zwar mit zwei Schnitten 66, 67, von denen der in Förderrichtung 4 nacheilende Schnitt 66 durch ein Wellental 40 hinter dem Übergangs-Abschnitt 64 geführt wird, während der in Förderrichtung 4 voreilende Schnitt 67 entlang dem Einführende 46 der Muffe 41 geführt wird.

Anstelle von zwei Extrudern 1, 2 und einem Quer-Spritzkopf 8 kann auch ein einziger Extruder eingesetzt werden und ein Spritzkopf, wie er beispielsweise aus der EP 0 509 216 B (entsprechend US-Patent 5,346,384) und der EP 0 834 386 B (entsprechend US-Patent 6,045,347) bekannt ist, worauf verwiesen wird.

## Patentansprüche

1. Verfahren zur fortlaufenden Herstellung eines aus einem glatten Innen-Rohr (39') und einem mit diesem verschweißten, mit Wellenbergen (38) versehenen Außen-Rohr (37') bestehenden Verbundrohres (10) mit einer Rohr-Muffe (41) und einer Mittel-Längs-Achse (18) mit folgenden Verfahrensschritten:
- es wird konzentrisch zur Mittel-Längs-Achse (18) ein Außen-Schlauch (37) extrudiert;
- der Außen-Schlauch (37) wird durch von außen aufgebrachtes Teil-Vakuum mit einer Wellung mit Wellenbergen (38) und Wellentälern (40) versehen;
- es wird ein Innen-Schlauch (39) konzentrisch zur Mittel-Längs-Achse (18) in den Außen-Schlauch (37) extrudiert;
- der Innen-Schlauch (39) wird mit den Wellentälern (40) des Außen-Schlauches (37) verschweißt;
- der Außen-Schlauch (37) wird in vorgegebenen Abständen unter Aufbringung des Teil-Vakuums von außen zur Erzeugung einer Rohr-Muffe (41) aufgeweitet,
- der Innen-Schlauch (39) wird von innen mit Gas mit einem Druck über Atmosphärendruck beaufschlagt und zur Fertigstellung der Rohr-Muffe (41) unter Aufweitung vollflächig gegen den aufgeweiteten Bereich des Außen-Schlauches (37) gedrückt, und
- zwischen der Rohr-Muffe (41) und einem benachbarten Wellental (40) wird ein aus Innen-Schlauch (39) und Außen-Schlauch (37) geformter - bezogen auf die Mittel-Längs-Achse (18) - nach außen gerichteter Übergangs-Abschnitt (61, 64) ausgebildet,
**dadurch gekennzeichnet,**
**dass** der Übergangs-Abschnitt (61, 64) im Bereich zwischen Innen-Schlauch (39) und Außen-Schlauch (37) in einen benachbarten Wellenberg (38) entlüftet wird.

2. Verfahren nach Anspruch 1, **dadurch gekennzeichnet,**
**dass** der Außen-Schlauch (37) im Bereich des Übergangs-Abschnitts (61, 64) mit mindestens einem zum benachbarten Wellenberg (38) fiihrenden Kanal (59, 63)versehen wird.

3. Verfahren nach Anspruch 1 oder 2, **dadurch gekennzeichnet,**
**dass** der Außen-Schlauch (37) im Bereich des Übergangs-Abschnitts (61, 64) mit mindestens einem, ein benachbartes Wellental (40) durchdringenden, in Richtung der Mittel-Längs-Achse (18) verlaufenden Überström-Kanal (59, 63) versehen wird.

4. Verfahren nach Anspruch 2 oder 3, **dadurch gekennzeichnet,**
**dass** der Außen-Schlauch (37) im Bereich des Übergangs-Abschnitts (61, 64) mit mindestens einem in den zum benachbarten Wellenberg (38) führenden Kanal (59, 63) mündenden, quer zur Mittel-Längs-Achse verlaufenden Verbindungs-Kanal (60, 62) versehen wird.

5. Verfahren nach Anspruch 1, **dadurch gekennzeichnet,**
**dass** in die noch in verformungsfähigem Zustand befindliche Rohr-Muffe (41) Druckluft eingeblasen wird.

6. Verbundrohr, das insbesondere nach dem Verfahren nach einem der Ansprüche 1 bis 5 hergestellt ist,
- mit einer Mittel-Längs-Achse (18),
- mit einem konzentrisch zur Mittel-Längs-Achse (18) verlaufenden glattwandigen Innen-Rohr (39'),
- mit einem gewellten Außen-Rohr (37'), das
-- Wellenberge (38) und
-- zwischen den Wellenbergen (38) Wellentäler (40) aufweist, die mit dem Innen-Rohr (39') verschweißt sind,
- mit einer einstückig angeformten Rohr-Muffe (41),
- mit einem zwischen einem Wellental (40) und der Rohr-Muffe (41) ausgebildeten Übergangs-Abschnitt (61, 64), der
-- zwischen Außen-Rohr (37') und Innen-Rohr (39') ausgebildet ist,
**dadurch gekennzeichnet,**
**dass** das Innere des Übergangs-Abschnitts (61, 64) zwischen Außen-Rohr (37') und Innen-Rohr (39') mittels mindestens eines ÜberströmKanals (59, 63) mit einem benachbarten Wellenberg (38) verbunden ist.

7. Verbund-Rohr nach Anspruch 6, **dadurch gekennzeichnet,**
**dass** der Überström-Kanal (59, 63) das Wellental (40) im Bereich des Außen-Rohres (37') in Richtung der Mittel-Längs-Achse durchdringt.

8. Verbund-Rohr nach Anspruch 6 oder 7, **dadurch gekennzeichnet, dass** im Außen-Rohr (37') im Bereich des Übergangs-Abschnitts (61, 64) mindestens ein in den Überström-Kanal (59, 63) mündender, tangential zur Mittel-Längs-Achse (18) verlaufender Verbindungs-Kanal (60, 62) vorgesehen ist.

9. Vorrichtung zur Durchführung des Verfahrens nach einem der Ansprüche 1 bis 5 und zur Herstellung eines Verbund-Rohres nach einem der Ansprüche 6 bis 8,
- wobei mit ringförmigen Formausnehmungen (32) versehene, sich auf einer Formstrecke (16) jeweils paarweise zu einer Form mit einer Mittel-Längs-Achse (18) ergänzende Halbkokillen (12, 12') im Kreislauf und in einer Förderrichtung (4) geführt angeordnet sind,
- wobei die Formausnehmungen (32) an in den Halbkokillen (12, 12') ausgebildete Teil-Vakuum-Kanäle (33) angeschlossen sind,
- wobei der Formstrecke (16) ein Spritzkopf (8) mindestens eines Extruders (1, 2) vorgeordnet ist,
- wobei der Spritzkopf (8) mit einer Außen-Düse (22) zur Extrusion eines Außen-Schlauches (37) und in Förderrichtung (4) nachgeordnet mit einer Innen-Düse (21) zur Extrusion eines Innen-Schlauches (39) und an seinem in Förderrichtung (4) hinten liegenden Ende mit einem Kalibrierdorn (25) versehen ist,
- wobei zwischen Außen-Düse (22) und Innen-Düse (21) aus dem Spritzkopf (8) mindestens ein Gaskanal (24) ausmündet,
- wobei zwischen Innen-Düse (21) und Kalibrierdorn (25) mindestens ein zusätzlicher Gas-Kanal (30) aus dem Spritzkopf (8) ausmündet,
- wobei mindestens ein Paar Halbkokillen (12, 12') mit einer Muffen-Ausnehmung (42) versehen ist und
- wobei an einem zwischen der Muffen-Ausnehmung (42) und einer benachbarten Formausnehmung (32) befindlichen Ringsteg (48, 49) eine - bezogen auf die Mittel-Längs-Achse (18) - nach außen gerichtete Übergangs-Fläche (44, 47) ausgebildet ist,
**dadurch gekennzeichnet,**
**dass** in dem mindestens einen Ringsteg (48, 49) eine die Übergangs-Fläche (44, 47) mit der benachbarten ringförmigen Formausnehmung (32) verbindende Ausnehmung (50, 51) vorgesehen ist.

10. Vorrichtung nach Anspruch 9, **dadurch gekennzeichnet,**
**dass** in der Übergangs-Fläche (44, 47) mindestens eine in die Ausnehmung (50, 51) mündende Verbindungsnut (52, 53) ausgebildet ist.

11. Vorrichtung nach Anspruch 9 oder 10, **dadurch gekennzeichnet, dass** der Kalibrierdorn (25) mit einem Druckluft-Kanal (65) versehen ist.

## Claims

1. A method of continuously producing a twin-wall pipe (10) comprising a smooth internal pipe (39') and an external pipe (37') that is united with the internal pipe (39') by welding and provided with elevations (38);
a pipe socket (41); and
a central longitudinal axis (18);
the method comprising the following steps:
- extruding an external tube (37) concentrically of the central longitudinal axis (18);
- corrugating the external tube (37) with elevations (38) and troughs (40) by partial vacuum applied from outside;
- extruding an internal tube (39) into the external tube (37) concentrically of the central longitudinal axis (18);
- welding together the internal tube (39) and the troughs (40) of the external tube (37);
- expanding the external tube (37) at given distances by the partial vacuum being applied from outside, to form an expanded area for a pipe socket (41) to be produced;
- actuating the internal tube (39) inwardly by gas of a pressure above atmospheric pressure and expanding and pressing the internal tube (39) full face against the expanded area of the external tube (37) for the pipe socket (41) to be finished; and
- forming a transition portion (61, 64) between the pipe socket (41) and an adjacent trough (40), the transition portion (61, 64) being comprised of the internal tube (39) and external tube (37) and directed outwards in relation to the central longitudinal axis (18);
**characterized**
**in that** the transition portion (61, 64), in an area between the internal tube (39) and external tube (37), is vented into an adjacent elevation (38).

2. A method according to claim 1, **characterized in that** the external tube (37), in an area of the transition portion (61, 64), is provided with at least one passage (59, 63) that leads to the adjacent elevation (38).

3. A method according to claim 1 or 2, **characterized in that** the external tube (37) in an area of the transition portion (61, 64), is provided with at least one overflow passage (59, 63) which passes through an adjacent trough (40) and extends in a direction of the central longitudinal axis (18).

4. A method according to claim 2 or 3, **characterized in that** the external tube (37), in an area of the transition portion (61, 64), is provided with at least one connecting passage (60, 62) which extends crosswise of the central longitudinal axis and mouthes into the passage (59, 63) that leads to the adjacent elevation (38).

5. A method according to claim 1, **characterized in that** compressed air is blown into the pipe socket (41) while it is still in a formable condition.

6. A twin-wall pipe, which is manufactured in particular according to the method of one of claims 1 to 5, comprising
- a central longitudinal axis (18);
- a smooth-wall internal pipe (39') which extends concentrically of the central longitudinal axis (18);
- a corrugated external pipe (37'), having
-- elevations (38) and
-- troughs (40) between the elevations (38), the troughs (40) and the internal pipe (39') being welded together;
- a pipe socket (41) which is molded integrally with the internal pipe (39') and the external pipe (37');
- a transition portion (61, 64) between a trough (40) and the pipe socket (41),
-- the transition portion (61, 64) being formed between the external pipe (37') and the internal pipe (39');
**characterized**
**in that** the inside of the transition portion (61, 64) between the external pipe (37') and internal pipe (39') is connected to an adjacent elevation (38) by at least one overflow passage (59, 63).

7. A twin-wall pipe according to claim 6, **characterized in that** the overflow passage (59, 63) passes through the trough (40) in an area of the external pipe (37') in a direction of the central longitudinal axis.

8. A twin-wall pipe according to claim 6 or 7, **characterized in that** at least one connecting passage (60, 62) is provided in the external pipe (37') in an area of the transition portion (61, 64), mouthing into the overflow passage (59, 63) and extending tangentially to the central longitudinal axis (18).

9. An apparatus for putting into practice the method according to one of claims 1 to 5 and for manufacture of a twin-wall pipe according to one of claims 6 to 8,
- wherein half shells (12, 12') are disposed for guided circulation in a conveying direction (4), which are provided with annular mold recesses (32) and which unite in pairs on a molding path (16), forming a mold with a central longitudinal axis (18);
- wherein the mold recesses (32) are connected to partial-vacuum channels (33) in the half shells (12, 12');
- wherein an extrusion head (8) of at least one extruder (1, 2) is disposed upstream of the molding path (16);
- wherein the extrusion head (8) is provided with an outer die (22) for extrusion of an external tube (37) and, downstream as seen in the conveying direction (4), with an inner die (21) for extrusion of an internal tube (39) and, at its downstream end as seen in the conveying direction (4), with a calibrating mandrel (25);
- wherein at least one gas duct (24) discharges from the extrusion head (8) between the outer die (22) and the inner die (21);
- wherein at least one additional gas duct (30) discharges from the extrusion head (8) between the inner die (21) and the calibrating mandrel (25);
- wherein at least one pair of half shells (12, 12') is provided with a socket recess (42); and
- wherein a transition area (44, 47), which is directed outwards in relation to the central longitudinal axis (18), is formed on an annular rib (48, 49) that is located between the socket recess (42) and an adjacent mold recess (32);
**characterized**
**in that** a recess (50, 51) is provided in the at least one annular rib (48, 49), connecting the transition area (44, 47) to the adjacent annular mold recess (32).

10. An apparatus according to claim 9, **characterized in that** at least one connecting groove (52, 53) is formed in the transition area (44, 47), mouthing into the recess (50, 51).

11. An apparatus according to claim 9 or 10, **characterized in that** the calibrating mandrel (25) is provided with a compressed-air duct (65).

## Revendications

1. Procédé de fabrication en continu d'un tube d'assemblage (10), constitué d'un tube interne (39') lisse et d'un tube externe (37') soudé à ce dernier pourvu de sommets (38), présentant un manchon de tube (41) et un axe longitudinal médian (18) comportant les étapes de procédé suivantes :
- un tuyau externe (37) est extrudé de façon concentrique par rapport à l'axe longitudinal médian (18) ;
- le tuyau externe (37) est pourvu d'une ondulation avec des sommets (38) et des creux (40) par l'application d'un vide partiel depuis l'extérieur ;
- un tuyau interne (39) est extrudé dans le tuyau externe (37) de façon concentrique par rapport à l'axe longitudinal médian (18) ;
- le tuyau interne (39) est soudé aux creux (40) du tuyau externe (37) ;
- le tuyau externe (37) est élargi à des distances prédéfinies pour créer un manchon de tube (41) en appliquant le vide partiel depuis l'extérieur,
- le tuyau interne (39) est alimenté de l'intérieur en gaz ayant une pression supérieure à la pression atmosphérique et est comprimé sur toute sa surface contre la zone élargie du tuyau externe (37) pour achever le manchon de tube (41), et
- entre le manchon de tube (41) et un creux (40) voisin, une section de transition (61, 64) dirigée vers l'extérieur - par rapport à l'axe longitudinal médian (18) - formée d'un tuyau interne (39) et d'un tuyau externe (37) est réalisée,
**caractérisé en ce**
**que** la section de transition (61, 64) est ventilée dans un sommet (38) voisin dans la zone entre le tuyau interne (39) et le tuyau externe (37).

2. Procédé selon la revendication 1, **caractérisé en ce**
**que** le tuyau externe (37) est pourvu dans la zone de la section de transition (61, 64) d'au moins un canal (59, 63) conduisant à un sommet (38) voisin.

3. Procédé selon la revendication 1 ou 2, **caractérisé en ce**
**que** le tuyau externe (37) est pourvu dans la zone de la section de transition (61, 64) d'au moins un canal de trop plein (59, 63) s'étendant dans le sens de l'axe longitudinal médian (18), pénétrant dans un creux (40) voisin.

4. Procédé selon la revendication 2 ou 3, **caractérisé en ce**
**que** le tuyau externe (37) est pourvu dans la zone de la section de transition (61, 64) d'au moins un canal de jonction (60, 62) s'étendant de manière transversale à l'axe longitudinal médian, débouchant dans le canal (59, 63) conduisant au sommet (38) voisin

5. Procédé selon la revendication 1, **caractérisé en ce**
**que** de l'air comprimé est insufflé dans le manchon de tube (41) se trouvant encore dans un état déformable.

6. Tube d'assemblage, qui est fabriqué en particulier selon le procédé selon l'une quelconque des revendications 1 à 5,
- avec un axe longitudinal médian (18),
- avec un tube interne (39') à paroi lisse s'étendant de façon concentrique par rapport à l'axe longitudinal médian (18),
- avec un tube externe ondulé (37'), qui présente
-- des sommets (38) et
-- des creux (40) entre les sommets (38), qui sont soudés avec le tube interne (39'),
- avec un manchon de tube (41) moulé d'un seul tenant,
- avec une section de transition (61, 64) formée entre un creux (40) et le manchon de tube (41), qui est réalisée
- entre le tube externe (37') et le tube interne (39'),
**caractérisé en ce**
**que** l'intérieur de la section de transition (61, 64) entre le tube externe (37') et le tube interne (39') est relié à un sommet (38) voisin à l'aide d'au moins un canal de trop-plein (59, 63).

7. Tube d'assemblage selon la revendication 6, **caractérisé en ce**
**que** le canal de trop-plein (59, 63) pénètre dans le creux (40) dans la zone du tube externe (37') dans le sens de l'axe longitudinal médian.

8. Tube d'assemblage selon la revendication 6 ou 7, **caractérisé en ce**
**que** dans le tube externe (37') dans la zone de la section de transition (61, 64), au moins un canal de jonction (60, 62) s'étendant de manière tangentielle à l'axe longitudinal médian (18), débouchant dans le canal de trop-plein (59, 63) est prévu.

9. Dispositif de mise en oeuvre du procédé selon l'une quelconque des revendications 1 à 5 et de fabrication d'un tube d'assemblage selon l'une quelconque des revendications 6 à 8,
- des demi-coquilles (12, 12') se complétant respectivement par paire sur une section de moulage (16) en un moule doté d'un axe longitudinal médian (18), munies d'évidements de moule (32) circulaires étant disposées en cercle et amenées dans le sens de transport (4),
- les évidements de moule (32) étant raccordés aux canaux de vide partiel (33) formés dans les demi-coquilles (12, 12'),
- une tête de pulvérisation (8) d'au moins une extrudeuse (1, 2) étant disposée en amont de la section de moulage (16),
- la tête de pulvérisation (8) étant pourvue d'une buse externe (22) permettant d'extruder un tuyau externe (37) et d'une buse interne (21) placée en aval dans le sens de transport (4) permettant d'extruder un tuyau interne (39) et d'un mandrin de calibrage (25) à son extrémité située à l'arrière dans le sens de transport (4),
- au moins un canal de gaz (24) sortant de la tête de pulvérisation (8) entre la buse externe (22) et la buse interne (21),
- au moins un canal de gaz (30) supplémentaire sortant de la tête de pulvérisation (8) entre la buse interne (21) et le mandrin de calibrage (25),
- au moins une paire de demi-coquilles (12, 12') étant pourvue d'un évidement de manchon (42) et
- une surface de transition (44, 47) dirigée vers l'extérieur - par rapport à l'axe longitudinal médian (18) - étant réalisée au niveau d'un épaulement annulaire (48, 49) situé entre l'évidement de manchon (42) et un évidement de moule (32) voisin,
**caractérisé en ce**
**que** dans l'épaulement annulaire au moins au nombre de un (48, 49), un évidement (50, 51) reliant la surface de transition (44, 47) à l'évidement de moule (32) annulaire voisin est prévu.

10. Dispositif selon la revendication 9, **caractérisé en ce**
**qu'**au moins une rainure de raccordement (52, 53) débouchant dans l'évidement (50, 51) est réalisée dans la surface de transition (44, 47).

11. Dispositif selon la revendication 9 ou 10, **caractérisé en ce**
**que** le mandrin de calibrage (25) est pourvu d'un canal à air comprimé (65).
